# EUROPÄISCHE PATENTSCHRIFT

(11) **EP 0 841 234 B1**
(45) Veröffentlichungstag und Bekanntmachung des Hinweises auf die Patenterteilung: **08.01.2003**
(21) Anmeldenummer: 97890223.7
(22) Anmeldetag: 11.11.1997
(51) Int. Cl.: B62B 1/14, B62B 1/12

(54) **Zerlegbarer Sackkarren**
Dismountable trolley
Diable démontable

(30) Priorität: 12.11.1996 AT 197696
(43) Veröffentlichungstag der Anmeldung: 13.05.1998
(73) Patentinhaber: Bierma, Jochum Ing., A-4040 Linz (AT)
(72) Erfinder: Bierma, Jochum Ing., A-4040 Linz (AT)
(74) Vertreter: Hübscher, Helmut, Dipl.-Ing.

(56) Entgegenhaltungen:
- DE-B- 1 271 342
- US-A- 3 997 182
- US-A- 4 121 855
- US-A- 4 563 014
- US-A- 4 762 333
- US-A- 4 865 340

## Beschreibung

Die Erfindung bezieht sich auf einen zerlegbaren Sackkarren mit einem aus Längsholmen und Querstreben zusammensetzbaren Rahmengestell, das mit Zubehörteilen, wie Griffstücke, Radträger und Lastaufnahmemittel, bestückt ist, wobei zur gegenseitigen Verbindung der Gestell- und Zubehörteile Schraubenverbindungen vorgesehen sind.

Zerlegbare und in unterschiedlicher Konfiguration wieder zusammensetzbare oder mit verschiedenen Zubehörteilen ausstattbare Sackkarren sind bekannt, wobei zur Schraubenverbindung der einzelnen Gestell- und Zubehörteile bisher Schellen oder Klemmhülsen Verwendung finden, die auf den kreisförmigen oder ovalen Holmenrohren aufgezogen werden (DE-29 49 445 C). Damit kommt es aber zu lastaufnahmeseitigen Überständen dieser Verbindungsteile, die zu einem Hängenbleiben oder gar einer Beschädigung der aufzunehmenden Lasten führen können. Außerdem entstehen durch diese Schellen und Klemmhülsen lediglich kraftschlüssige Verbindungen, die höheren Belastungen vielfach nicht standhalten, und zusätzliche lagesichernde Befestigungsschrauben schwächen die Holmenrohre. Darüber hinaus ist die Festigkeit der üblicherweise aus Aluminium bestehenden Holmenrohre an sich oft unzureichend und auch das Zerlegen und Zusammenbauen der bekannten Sackkarren ist wegen der erforderlichen hohen Anzugsmomente der Verbindungsschrauben und der umständlichen Handhabung der Schellen und Klemmhülsen mühsam und kraftaufwendig.

Der Erfindung liegt daher die Aufgabe zugrunde, diese Mängel zu beseitigen und einen Sackkarren der eingangs geschilderten Art zu schaffen, der sich bei vergleichsweise einfachem Aufbau durch seine Montagefreundlichkeit, seine überstandsfreie Rahmengestellebene, seine Variationsvielfalt und nicht zuletzt durch seine hohe Stabilität und Belastbarkeit auszeichnet.

Die Erfindung löst diese Aufgabe dadurch, daß die Längsholme aus einem rechteckigen Formrohr bestehen, das innere, zwischen sich einen Freiraum zum Durchsetzen der Verbindungsschrauben bildende Stegwände aufweist. Durch diese einfache Maßnahme können praktisch an jeder Stelle der Längsholme zum Ansatz von Querstreben oder anderen Zubehörteilen Verbindungsschrauben gesetzt werden, die ein direktes Verschrauben der zu verbindenden Teile erlaubt. Es sind keine Schellen oder andere Klemmteile erforderlich, die Stegwände, die beidseits neben den Verbindungsschrauben verlaufen, verleihen dem Formrohr in Richtung der Schraubkräfte höchste Festigkeitseigenschaften und es ist bei glatten lastaufnahmeseitigen Formrohroberflächen an jeder beliebigen Verbindungsstelle ohne Verformungsgefahr eine hohe Spannkraft für die jeweilige Schraubverbindung zu erreichen. Auf Grund des Fehlens zusätzlicher Verbindungsteile wird auch das Zerlegen bzw. Zusammensetzen des Sackkarrens wesentlich erleichtert und es kann mit üblichen Schraubenwerkzeugen das Auslangen gefunden werden. Durch die Möglichkeit des Durchschraubens durch die Formrohre bietet sich darüber hinaus der Einsatz zwischen den Längsholmen durchgehender Spannschrauben an, mit denen beispielsweise rohrförmige Querstreben fest zwischen den Formrohren eingespannt werden können, was einfache und doch besonders verwindungssteife Rahmengestelle entstehen läßt.

Vorteilhaft ist es weiters, wenn die Formrohre an ihren einander zugekehrten Seitenwänden im Bereich zwischen den Stegwänden eine Längsnut bilden und die Querstreben und Zubehörteile in die Längsnuten einsteckbare Ansatzstollen aufweisen. Mit diesen Längsnuten ergibt sich eine Ansatzhilfe für die mit den Längsholmen zu verbindenden Teile, wobei durch das Eingreifen der Ansatzstollen dieser Teile in die Längsnuten eine lage- und verdrehsichere Verbindung gewährleistet wird. Darüber hinaus bieten die Längsnuten Längsführungen für verschiebbare Zubehörteile und der durch das Eingreifen der Ansatzstollen in die Längsnut erreichbare Formschluß erhöht die Steifigkeit des Rahmengestells.

Nach einer günstigen Ausgestaltung der Erfindung sind die beiden Radträger jeweils über zwei Stützarme an den einander zugekehrten Seitenwänden der Formrohre ansetzbar, wobei die Stützarme v-förmig von einem Trägerkörper ausgehen, der zur Einzelradlagerung der Karrenräder einen Lagersitz und eine koaxiale Befestigungsschraube zum Aufstecken und Festklemmen einer Radlagerbüchse od. dgl. aufweist, und wobei die Trägerkörper miteinander über eine eigene, als Fußstütze dienende Querstrebe verspannbar sind. Der feste Ansatz der Radträger an den Formrohren und die gegenseitige Verspannung der Radträger erlauben es, die Karrenräder einzeln zu lagern und sie nicht wie bisher auf einer gemeinsamen Achse aufziehen zu müssen, was die Montage und Demontage wesentlich vereinfacht. Darüber hinaus läßt sich die Querstrebe zwischen den Radträgern so anordnen, daß sie eine günstige Fußstütze ergibt und die Handhabung des Karrens erleichtert. Trotz materialsparender, leichtgewichtiger Ausbildung der Radträger ist dabei eine hochbelastbare Radabstützung des Karrens gewährleistet.

Als Zubehör für Sackkarren sind über eine Betätigungsstange den Längsholmen entlang schiebeverstellbare Pendelgreifer bekannt, welche Betätigungsstange durch einen Führungsschlitz einer Querstrebe hindurchragt und dieser Querstrebe gegenüber verriegelbar ist. Mit diesen Pendelgreifern, die durch ihre Schiebeverstellbarkeit in Öffnungen der aufzunehmenden Lasten eingehakt werden können, lassen sich beispielsweise Getränkekisten schnell und einfach aufnehmen und transportieren. Die bekannten Pendelgreifer werden dabei wiederum über Schiebemuffen an den Längsholmen geführt, wobei Lochstangen als Betätigungsstangen dienen, die mittels Arretierstiften verriegelbar sind (DE-29 19 596 C). Diese Pendelgreifer sind dadurch meist schwergänging und es kommt immer wieder zu Unsicherheiten der Verriegelung. Um auch hier eine entsprechende Verbesserung zu erreichen, greift erfindungsgemäß der Pendelgreifer über seitliche Gleitschuhe in die Längsnuten der Formrohre ein und ist auf der mit ihren Ansatzstollen in die Längsnuten eingesetzten Querstrebe im Bereich des Führungsschlitzes ein um eine Normalachse zur Rahmengestellebene schwenkbarer, schwerkrafts- oder federkraftsbelastet in eine seitliche Rastenverzahnung der Betätigungsstange einrastbarer Schwenkriegel abgestützt. Dadurch kann der gut geführte Pendelgreifer reibungsarm und daher leichtgängig verstellt und betätigt werden, wobei auf Grund des in die Rastenverzahnung selbsttätig einrastenden Schwenkriegels eine sich bei Belastung verstärkende Selbstverriegelung zustande kommt, die eine funktionssichere Handhabung der aufgenommenen Lasten ermöglicht.

Ist der Sackkarren zur leichteren Überwindung von Treppenstufen od. dgl. mit von den Radträgern ausgehenden und in Griffstücke endenden Stützkufen ausgestattet, sind diese Stützkufen erfindungsgemäß zusammen mit der die Fußstütze bildenden Querstrebe an den Trägerkörpern der Radträger festgeschraubt, wobei die Enden der rohrförmigen Stützkufen ein gelochtes Füllstück aufnehmen. Durch die gemeinsame Verspannung von Radträgem, Fußstütze und Stützkufen wird nicht nur der Karrenaufbau vereinfacht, sondern auch die Stabilität des Rahmens erhöht und die gelochten Füllstücke in den Kufenenden erlauben das Durchstecken einer Spannschraube und ein Schraubverspannen ohne Verformungsgefahr.

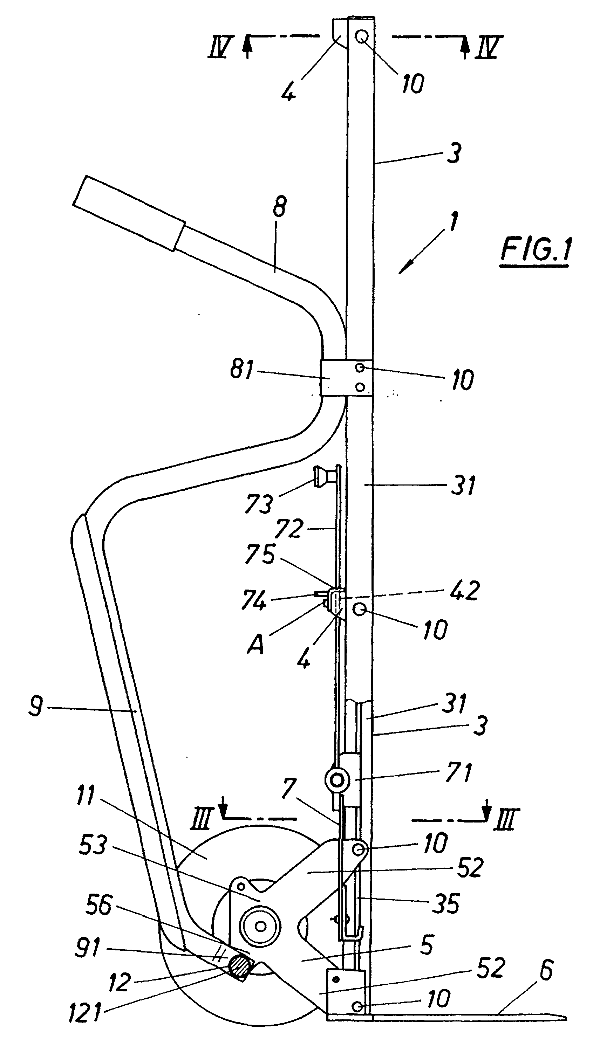

In der Zeichnung ist der Erfindungsgegenstand beispielsweise veranschaulicht, und zwar zeigen
- Fig. 1: einen erfindungsgemäßen Sackkarren in teilgeschnittener Seitenansicht,

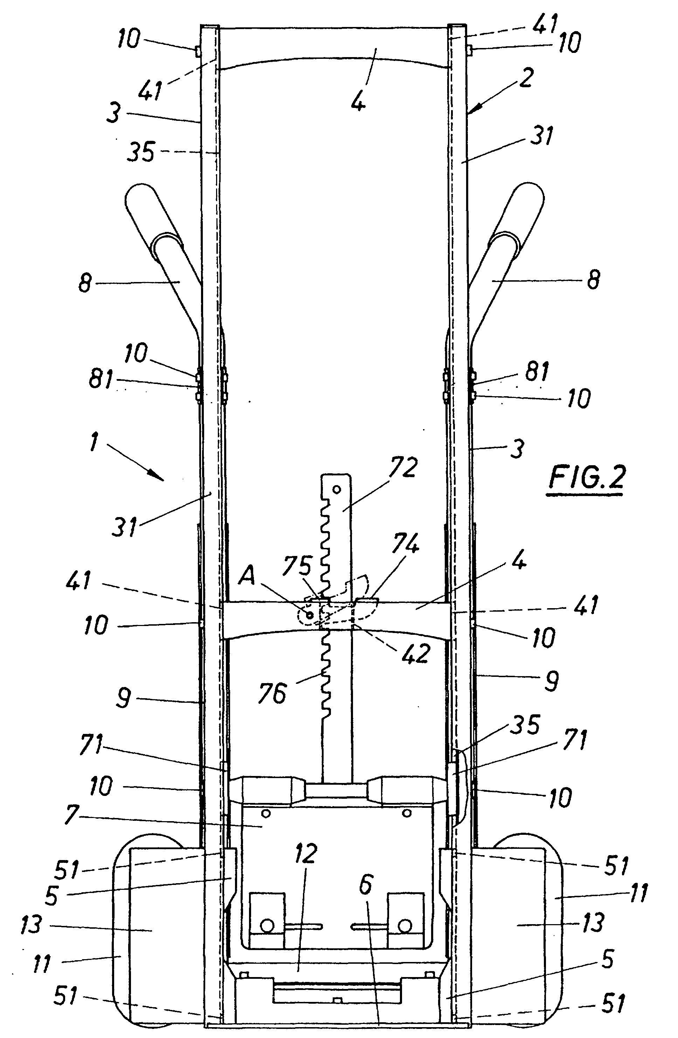

- Fig. 2: diesen Sackkarren in teilgeschnittener Vorderansicht,

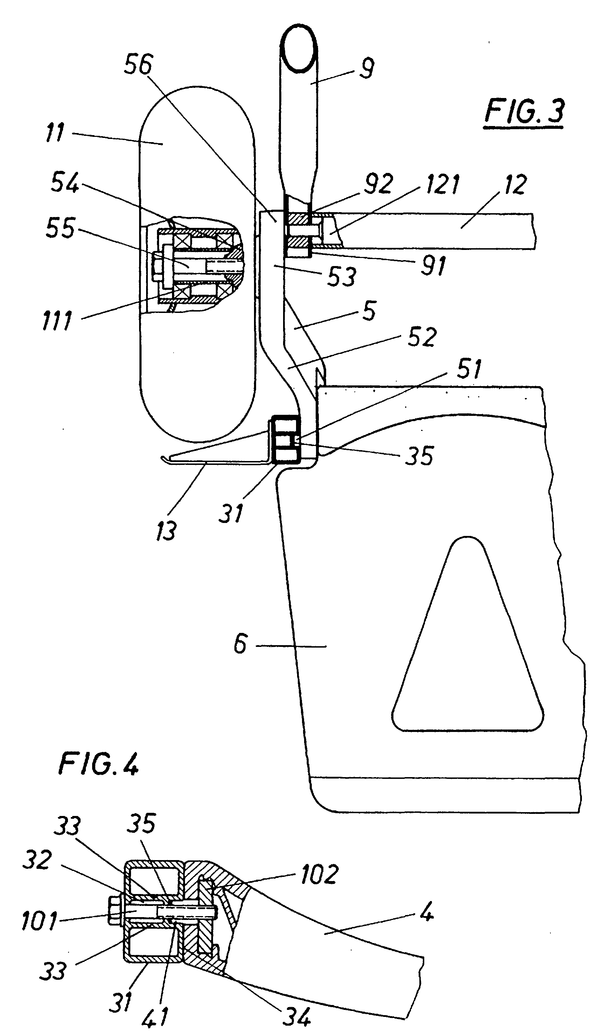

- Fig. 3: einen Querschnitt nach der Linie III-III der Fig. 1 größeren Maßstabes und
- Fig. 4: einen Querschnitt nach der Linie IV-IV der Fig. 1 ebenfalls in größerem Maßstab.

Ein Sackkarren 1 weist ein Rahmengestell 2 aus Längsholmen 3 und Querstreben 4 auf, das mit Zubehörteilen, wie Radträgern 5, einer Schaufel 6 und/oder einen Pendelgreifer 7 als Lastaufnahmemittel, sowie Griffstücke 8 bildenden Stützkufen 9 oder auch nur einzelnen Griffstücken u. dgl. bestückt werden kann. Zur gegenseitigen Verbindung der Karrenteile gibt es Schraubenverbindungen 10 zum Zerlegen und wahlweisen Zusammenbauen des Karrens 1.

Die Längsholme 3 des Rahmengestells 2 bestehen aus einem rechteckigen Formrohr 31, das innere, zwischen sich einen Freiraum 32 zum Durchsetzen der Verbindungsschrauben 101 bildende Stegwände 33 aufweist und an den einander zugekehrten Seitenwänden 34 im Bereich zwischen den Stegwänden 33 eine Längsnut 35 ausformt. Die mit den Längsholmen 3 verschraubbaren Karrenteile, wie die Querstreben 4 oder auch die Radträger 5, sind mit diesen Längsnuten 35 zugeordneten Ansatzstollen 41, 51 ausgestattet, so daß sich beim Verschrauben dieser Teile eine einfache und doch hochfeste und lage- und verdrehsichere Schraubverbindung 10 ergibt, wobei auf Grund der Formrohrausbildung ein direktes Verschrauben ohne Einsatz von Klemmhülsen od. dgl. möglich ist und es dadurch auch zu keinen lastaufnahmeseitigen Überständen über die Längsholme 3 kommt.

Die Verbindungsschrauben 101 können praktisch an beliebiger Stelle entlang des Formrohres 31 positioniert werden und lassen sich direkt in die zu befestigenden Zubehörteile od. dgl. einschrauben oder mittels entsprechender Muttern 102 ansetzen.

Die Radträger 5 sind jeweils über zwei Stützarme 52, die an ihren Enden die Ansatzstollen 51 aufweisen, an den Formrohren 31 festgeschraubt, welche Stützarme 52 v-förmig von einem mittigen Trägerkörper 53 ausgehen, an dem die Karrenräder 11 einzeln gelagert sind. Dazu bildet der Trägerkörper 53 einen Lagersitz 54, gegen den eine Lagerhülse 111 der Karrenräder 11 mittels einer koaxialen Befestigungsschraube 55 festgeklemmt werden kann, so daß eine einfache und leichte Radmontage bzw. - demontage möglich ist. Die beiden Radträger 5 sind zur Versteifung des Karrens mit einer eigenen Querstrebe 12 verspannt, die gleichzeitig als Fußstütze dient. Diese Querstrebe 12 besteht aus einem Rohrstück, das über eine durchgehende Stange mit endseitigen Gewindebolzen 121 zwischen entsprechenden Anschlußwangen 56 des Trägerkörpers 53 festgespannt wird. Gleichzeitig mit dieser Querstrebe 12 lassen sich auch die Stützkufen 9 an den Radträgern 5 befestigen, wobei in den Enden 91 der rohrförmigen Kufen ein gelochtes Füllstück 92 eingesetzt ist, um verformungsfrei der aufgebrachten Spannkraft widerstehen zu können. Die Stützkufen 9, die das Überwinden von Treppenstufen erleichtern, sind dann im Bereich der Griffstücke 8 unter Verwendung u-förmiger Befestigungsbügel 81 mit entsprechenden Verbindungsschrauben 101 wiederum an den Formrohren 31 festgeschraubt.

An den Radträgern 5 ist üblicherweise als Lastaufnahmemittel eine Schaufel 6 befestigt und die Schraubverbindungen 10 zum Ansetzen der Radträger 5 an den Formrohren 31 dient gleichzeitig auch zur Fixierung von Radschutzblechen 13.

Ist zusätzlich als Lastaufnahmemittel ein Pendelgreifer 7 vorgesehen, dann wird dieser über seitliche Gleitschuhe 71 den Längsholmen 3 entlanggeführt, welche Gleitschuhe 71 in die Längsnuten 35 eingreifen. Der Pendelgreifer 7 kann über eine Betätigungsstange 72 schiebeverstellt werden, die einen Handgriff 73 trägt und durch einen Führungsschlitz 42 einer der Querstreben 4 hindurchragt und dieser Querstrebe gegenüber auch verriegelbar ist. Dazu stützt sich an der Querstrebe 42 ein um eine zur Rahmengestellebene normale Schwenkachse A schwenkbarer Schwenkriegel 74 ab, der mit einem Riegelansatz 75 in eine seitliche Rastverzahnung 76 der Betätigungsstange 72 einrastet. Beim Hochziehen des Pendelgreifers 7 wird dieser selbsttätig entriegelt, beim Abwärtschieben oder bei Gewichtsbelastung kommt es hingegen zu einem selbsttätigen Einrasten des Schwenkriegels 74 und damit zu einer sicheren Verrastung des Pendelgreifers 7.

## Patentansprüche

1. Zerlegbarer Sackkarren (1) mit einem aus Längsholmen (3) und Querstreben (4) zusammensetzbaren Rahmengestell (2), das mit Zubehörteilen, wie Griffstücke (8), Radträger (5) und Lastaufnahmemittel (6, 7), bestückt ist, wobei zur gegenseitigen Verbindung der Gestell- und Zubehörteile (3, 4, 5, 6, 7, 8) Schraubenverbindungen (10) vorgesehen sind, **dadurch gekennzeichnet, daß** die Längsholme (3) aus einem rechteckigen Formrohr (31) bestehen, das innere, zwischen sich einen Freiraum (32) zum Durchsetzen der Verbindungsschrauben (101) bildende Stegwände (33) aufweist.

2. Sackkarren nach Anspruch 1, **dadurch gekennzeichnet, daß** die Formrohre (31) an ihren einander zugekehrten Seitenwänden (34) im Bereich zwischen den Stegwänden (33) eine Längsnut (35) bilden und die Querstreben (4) und Zubehörteile (5) in die Längsnuten (35) einsteckbare Ansatzstollen (41, 51) aufweisen.

3. Sackkarren nach Anspruch 1 oder 2, **dadurch gekennzeichnet, daß** die beiden Radträger (5) jeweils über zwei Stützarme (52) an den einander zugekehrten Seitenwänden (34) der Formrohre (31) ansetzbar sind, wobei die Stützarme (52) v-förmig von einem Trägerkörper (53) ausgehen, der zur Einzelradlagerung der Karrenräder (11) einen Lagersitz (54) und eine koaxiale Befestigungsschraube (55) zum Aufstecken und Festklemmen einer Radlagerbüchse (111) od. dgl. aufweist, und wobei die Trägerkörper (53) miteinander über eine eigene, als Fußstütze dienende Querstrebe (12) verspannbar sind.

4. Sackkarren nach Anspruch 1 und 2, mit einem über eine Betätigungsstange den Längsholmen entlang schiebeverstellbaren Pendelgreifer, welche Betätigungsstange durch einen Führungsschlitz einer Querstrebe hindurchragt und dieser Querstrebe gegenüber verriegelbar ist, **dadurch gekennzeichnet, daß** der Pendelgreifer (7) über seitliche Gleitschuhe (71) in die Längsnuten (35) der Formrohre (31) eingreift und auf der mit ihren Ansatzstollen (41) in die Längsnuten (35) eingesetzten Querstrebe (4) im Bereich des Führungsschlitzes (42) ein um eine Normalachse (A) zur Rahmengestellebene schwenkbarer, schwerkrafts- oder federkraftsbelastet in eine seitliche Rastenverzahnung (76) der Betätigungsstange (72) einrastbarer Schwenkriegel (74) abgestützt ist.

5. Sackkarren nach Anspruch 1 und 3, mit von den Radträgern ausgehenden und in Griffstücke endenden Stützkufen, **dadurch gekennzeichnet, daß** die Stützkufen (9) zusammen mit der die Fußstütze bildenden Querstrebe (12) an den Trägerkörpern (53) der Radträger (5) festgeschraubt sind, wobei die Enden (91) der rohrförmigen Stützkufen (9) ein gelochtes Füllstück (92) aufnehmen.

## Claims

1. A demountable sack truck (1) with a frame (2) adapted to be assembled from longitudinal members (3) and transverse struts (4), and equipped with accessories such as handle elements (8), wheel carriers (5), and load receiving means (6, 7), screw connections (10) being provided to interconnect the frame and accessory parts (3, 4, 5, 6, 7, 8), **characterised in that** the longitudinal members (3) consist of a rectangular shaped tube (31) having internal web walls (33) which between them form a free space (32) for the passage of the connecting screws (101).

2. A sack truck according to claim 1, **characterised in that** the shaped tubes (31) form a longitudinal groove (35) at their facing side walls (34) in the region between the web walls (33), and the transverse struts (4) and accessory parts (5) have cleats (41, 51) for insertion into the longitudinal grooves (35).

3. A sack truck according to claim 1 or 2, **characterised in that** the two wheel carriers (5) are each attachable to the facing side walls (34) of the shaped tubes (31) via two support arms (52) which extend in the form of a v from a carrier member (53) which, for individual wheel suspension of the cart wheels (11), has a bearing seat (54) and a coaxial fixing screw (56) for the fitting and clamping of a wheel bearing bush (111) or the like, and wherein the carrier members (53) are adapted to be clamped together by means of a separate transverse strut (12) serving as a foot support.

4. A sack truck according to claims 1 and 2, with a swing gripper slidable along the longitudinal members by means of an actuating rod which extends through a guide slot in a transverse strut and is lockable relatively thereto, **characterised in that** the swing gripper (7) engages via lateral sliding shoes (71) in the longitudinal grooves (35) of the shaped tubes (31) and there is supported on the transverse strut (4) inserted by its cleats (41) in the longitudinal grooves (35) and in the region of the guide slot (42) a pivoting latch (74) which is adapted to pivot about a normal axis (A) to the frame plane and which loaded by gravity or spring force is engageable in a lateral catch toothing (76) of the actuating rod (72).

5. A sack truck according to claims 1 and 3 with support skids extending from the wheel carriers and ending in handle members, **characterised in that** the support skids (9) are screwed to the carrier members (53) of the wheel carriers (5) together with the transverse strut (12) forming the foot support, the ends (91) of the tubular support skids (9) receiving a perforate filler (92).

## Revendications

1. Diable (1) démontable avec un bâti de cadre (2) composé de longerons (3) et de traverses (4), bâti muni d'accessoires, tels que des éléments de saisie (8), des supports de roue (5) et des moyens supports de charge (6, 7), sachant que, pour assurer une liaison mutuelle entre les parties bâti et les accessoires (3, 4, 5, 6, 7, 8), sont prévues des liaisons par vissage (10), **caractérisé en ce que** les longerons (3) sont formés d'un tube profilé (31) rectangulaire, présentant des parois de nervure (33) intérieures, formant entre elles un espace libre (32) pour laisser passer les vis de liaison (101).

2. Diable selon la revendication 1, **caractérisé en ce que** les tubes profilés (31) présentent, sur leurs parois latérales (34) tournées l'une vers l'autre, dans la zone située entre les parois de nervure (33), une rainure longitudinale (35), et les traverses (4) et les accessoires (5) présentent des languettes de montage (41, 51) susceptibles d'être enfichées dans les rainures longitudinales (35).

3. Diable selon la revendication 1 ou 2, **caractérisé en ce que** les deux supports de roue (5) sont chacun susceptibles d'être monté, par l'intermédiaire de deux bras d'appui (52), sur les parois latérales (34) tournées l'une vers l'autre, des tubes profilés (31), les bras d'appui (52) partant, en forme de V, d'un corps support (53) présentant, pour servir de palier pour les différentes roues de diable (11), un siège de palier (54) et une vis de fixation (55) coaxiale, pour l'enfichage et le blocage par serrage d'une douille de palier de roue (111) ou analogue, les corps supports (53) étant susceptibles d'être serrés ensemble à l'aide de traverses (12) propres servant de pieds d'appui.

4. Diable selon la revendication 1 ou 2, avec un grappin oscillant, réglable en coulissement le long des longerons par l'intermédiaire d'une tige d'actionnement, la tige d'actionnement passant par une fente de guidage d'une traverse et étant verrouillable par rapport à cette traverse, **caractérisé en ce que** le grappin oscillant (7) s'engage, par des patins coulissants (71) latéraux, dans les rainures longitudinales (35) des tubes profilés (31), et un verrou pivotant (74), encliquetable dans une denture d'encliquetage (76) latérale de la tige d'actionnement (72), sous la charge de la gravité ou de la force d'un ressort, prend appui sur la traverse (4), insérée dans les rainures longitudinales (35) par ses languettes de montage (41), dans la zone de la fente de guidage (42), le verrou pivotant étant susceptible de pivoter autour d'un axe (A) normal par rapport au plan du bâti de cadre.

5. Diable selon les revendications 1 et 3, avec des coussins d'appui partant des supports de roue et s'achevant dans des éléments de poignées, **caractérisé en ce que** les coussins d'appui (9) sont bloqués par vissage, conjointement avec la traverse (12) formant les pieds d'appui, sur les corps support (53) des supports de roue (5), les extrémités (91) des patins d'appui (9) à forme tubulaire supportant une pièce de remplissage (92) perforée.
